# NEUE EUROPÄISCHE PATENTSCHRIFT

(11) **EP 1 868 737 B2**
(45) Veröffentlichungstag und Bekanntmachung des Hinweises auf die Entscheidung über den Einspruch: **28.07.2021**
(45) Hinweis auf die Patenterteilung: 01.08.2018
(21) Anmeldenummer: 06725644.6
(22) Anmeldetag: 07.04.2006
(51) Int. Cl.: B05D 7/08, C09J 123/08, C09J 163/00, C09J 175/04

(54) **MEHRSTUFIG HÄRTENDE OBERFLÄCHENBESCHICHTUNG**
SURFACE COVERING WHICH IS HARDENED IN SEVERAL STAGES
REVETEMENT DE SURFACE A DURCISSEMENT EN PLUSIEURS ETAPES

(30) Priorität: 08.04.2005 DE 102005016516
(43) Veröffentlichungstag der Anmeldung: 26.12.2007
(73) Patentinhaber: Klebchemie M.G. Becker GmbH & Co. KG, 76356 Weingarten/Baden (DE)
(72) Erfinder: EHRMANN, Elke, 76530 Baden-Baden (DE); FANDREY, Jens, 75180 Pforzheim (DE); FAHRLÄNDER, Michael, 76297 Stutensee (DE); BECKER-WEIMANN, Klaus, 76530 Baden-Baden (DE)
(74) Vertreter: Büchel, Edwin
(86) Internationale Anmeldenummer: PCT/EP2006/061436
(87) Internationale Veröffentlichungsnummer: WO 2006/106143

(56) Entgegenhaltungen:
- EP-A1- 1 734 095
- WO-A-98/40225
- WO-A1-2006/066954
- WO-A2-2004/083272
- DE-A1- 4 041 753
- DE-A1- 19 806 136
- DE-A1- 19 853 813
- US-A- 4 173 682
- US-A- 4 598 009
- US-A1- 2004 010 076

## Beschreibung

Die vorliegende Erfindung betrifft ein Verfahren zur Versiegelung von Gegenstandsoberflächen, Gegenstände mit solchen versiegelten Oberflächen sowie die Verwendung von Schmelzmassen zur Versiegelung der Oberfläche.

In den verschiedensten Anwendungsgebieten kommen zurzeit Lacke als Versiegelungsschicht auf der Oberfläche von Gegenständen in großen Mengen zum Einsatz, so etwa in der Möbel- und holzverarbeitenden Industrie.

Weit verbreitete Lacksysteme sind dabei UV-härtende Lacke, die meist per Walzenauftrag, seltener im Sprühauftrag auf die Teile aufgetragen werden. Der anschließende Aushärtevorgang erfolgt mit UV-Licht bzw. UV-Lampen. Der maschinelle Aufwand bei der Lackierung mit UV-Lacken ist sehr hoch und erfordert einen sehr großen Raumbedarf. Der große Raumbedarf liegt auch darin begründet, dass Lackiervorgänge mit UV-härtenden Systemen meist mehrere Aufträge -in der Praxis sind drei bis vier Aufträge gängig- erfordern. Mit jedem Lackauftrag können aufgrund der Viskosität, speziell aber aufgrund der UV-Durchhärtung nur ca. 10 bis 20 µm dicke Schichten pro Arbeitsgang appliziert werden, weshalb in der Regel mehrere Lackaufträge erforderlich sind.

Auch andere Lacksysteme, wie z. B. 2-K-PUR-Lacke, Nitrolacke oder Wasserlacke müssen ebenfalls in mehreren Schichten aufgetragen werden. Füller, Grundierungen und gegebenenfalls Zwischenschliffe sind auch hier meist notwendig.

Vorteilig an Lacken ist jedoch, dass diese relativ schnell trocknen und danach eine hohe Feuchtigkeits- und Reinigungsmittelresistenz aufweisen können.

Aufgrund des erforderlichen mehrschichtigen Aufbringens der Lackschichten wurde nach Verfahren zur Versiegelung gesucht, die die Versiegelungsschicht möglichst in einem Arbeitsgang auf einen Gegenstand aufzubringen vermag.

Aus der DE 198 06 136 C2 ist es bekannt, bei einer Diele für Parkettböden mit wenigstens einer Holzschicht und einer Versiegelungsschicht auf ihrer Oberfläche vorzusehen, dass die Versiegelungsschicht als eine wasser- und lösungsmittelfreie, mit der Luftfeuchtigkeit aushärtende Reaktiv-Schmelzmasse-Schicht auf Polyurethanbasis ausgebildet ist. Die Reaktiv-Schmelzmasse-Schicht wird dabei auf die Holzschicht aufgerakelt, aufgewalzt oder aufgesprüht.

Auch die WO-A 02/094549 und die WO-A 02/094457 schlagen zur Versiegelung eines Furniers bzw. eines Möbelteils eine Reaktiv-Schmelzmasse-Schicht auf Polyurethanbasis vor. Hierbei wird die Schmelzmasse-Schicht beispielsweise mit einer Walze geglättet, um eine homogene Oberfläche zu erzielen. Damit bei der Glättung die Schmelzmasse nicht an der Walze verklebt, wird die Walzenoberfläche mit einem Trennmittel auf Parafinwachs-Basis versehen.

Die Schmelzmasse-Schicht hat den Vorteil, dass die gewünschten Schichtdicken in einem einzigen Arbeitsgang aufgetragen werden können. Außerdem bietet die ausgehärtete Schmelzmasse noch ausreichende Flexibilität, um die Bildung von Sprödrissen zu vermeiden.

Nachteilig an der Verwendung der Reaktiv-Schmelzmassen ist jedoch die lange Verweilzeit, bis dass die Quervernetzung und damit die vollständige Aushärtung abgeschlossen sind. Diese dauert in der Regel einige Tage, in denen eine Weiterverarbeitung oder Verpackung der versiegelten Gegenstände nur bedingt möglich ist.

Der vorliegenden Erfindung liegt daher die Aufgabe zugrunde, ein verbessertes Verfahren zur Versiegelung bereitzustellen, bei dem die oben geschilderten Nachteile zumindest teilweise vermieden werden.

Die Aufgabe wird gelöst durch ein Verfahren zur Versiegelung mindestens eines Teils der Oberfläche eines Gegenstandes, wobei dieser Teil zumindest teilweise aus Holz, Metall, Kunststoff oder Mineralstoff besteht und wobei der Gegenstand ein Laminat-, Parkett- oder Dielenboden Element, eine Paneele oder ein Furnier bzw. ein Möbel oder Möbelstück oder ein Blech ist, die Schritte enthaltend
(a) Versiegeln des mindestens einen Teils durch Aufbringen einer Schicht aus einer strahlenhärtbaren Schmelzmasse auf der Basis eines feuchtigkeitsvernetzenden Polyurethans auf zumindest einen Teil der Gegenstandsoberfläche; und
(b) Bestrahlung der Schmelzmasse-Schicht, wobei es sich bei dem Teil der Oberfläche um die gesamte Oberfläche einer Außenfläche handelt.

Es wurde gefunden, dass durch die Bestrahlung der durch Bestrahlung härtbaren Komponenten in der PU-Schmelzmasse es möglich ist, eine erste Festigkeit für die Versiegelung zu erzeugen, die eine weitere Behandlung ermöglicht und weiterhin die vollständige Aushärtung der Schmelzmasse durch die übliche Feuchtigkeitseinwirkung auf die Schmelzmasse-Schicht erfolgt. Hierbei ist es möglich eine mehrstufig härtende Oberflächenbeschichtung zur Versiegelung einer Oberfläche zu erhalten, die jedoch das Aufbringen mehrerer Schichten oder das mehrlagige Aufbringen einer Schicht vermeidet.

Bei der Bestrahlung handelt es sich beispielsweise um eine Elektronen- oder UV-Bestrahlung. Bevorzugt ist eine UV-Bestrahlung

Ein weiterer Aspekt der vorliegenden Erfindung ist ein Gegenstand mit einer Versiegelungsschicht auf zumindest einem Teil seiner Oberfläche enthaltend eine Schicht aus einer strahlenhärtbaren Schmelzmasse auf der Basis eines feuchtigkeitsvernetzenden Polyurethans, wobei es sich bei dem Teil der Oberfläche um die gesamte Oberfläche einer Außenfläche handelt, wobei der Teil der Gegenstandsoberfläche zumindest teilweise aus Holz, Metall, Kunststoff oder Mineralstoff besteht und wobei der Gegenstand ein Laminat-, Parkett- oder Dielenboden Element, eine Paneele oder ein Furnier bzw. ein Möbel oder Möbelstück oder ein Blech ist.

Bei der strahlenhärtbaren oder strahlungs-reaktiven Schmelzmasse auf Polyurethanbasis (nachfolgend auch vereinfachend reaktive Schmelzmasse genannt) handelt es sich vorzugsweise in Bezug auf den Polyurethan-Anteil, der die Basis der Schmelzmasse bildet, um eine handelsübliche Reaktiv-Schmelzmasse auf Polyurethanbasis, die normalerweise mit Hilfe der in der umgebenden Raumluft vorhandenen Feuchtigkeit reagiert und dabei aushärtet. Vorzugsweise ist diese Reaktiv-Schmelzmasse lösungsmittelfrei.

Der Schmelzbereich der Schmelzmasse beginnt vorzugsweise bei 50°C, mehr bevorzugt bei 75°C und insbesondere bevorzugt bei 100°C.

Die vorzugsweise lösungsmittelfreie reaktive Schmelzmasse-Schicht wird üblicherweise auf die zu versiegelnde Fläche bei einer Temperatur von mindestens 100 °C, etwa 100 °C bis 160 °C, vorzugsweise 120°C bis 150°C, aufgebracht. Dabei können normalerweise pro Quadratmeter zu beschichtender Oberfläche etwa 20 bis 170 g Reaktiv-Schmelzmasse aufgetragen werden. Die Reaktiv-Schmelzmasse ist bei Raumtemperatur fest und besitzt üblicherweise eine Dichte von ca. 1,1 g/m² und eine Viskosität nach BROOKFIELD bei 120 °C im Bereich von ca. 1.000 mPas bis ca 50.000 mPas, vorzugsweise 4.000 mPas bis 10.000 mPas.

Die Schicht kann beispielsweise aufgerakelt, ausgewalzt, aufgesprüht oder mittels einer Düse oder Schlitzdüse aufgebracht werden. Vorzugsweise erfolgt das Auftragen durch Walzen.

Zusätzlich ist bevorzugt, dass die Oberfläche der Schmelzmasse-Schicht geglättet wird. Dies kann beispielsweise durch ein Glättband oder eine -walze erfolgen.

Selbst in ausgehärtetem Zustand weist die reaktive Schmelzmasse-Schicht noch eine gewisse Restelastizität auf.

Vorzugsweise weist die reaktive Schmelzmasse-Schicht eine Dicke im Bereich von 5 µm bis 200 µm auf, mehr bevorzugt von 20 µm bis 200 µm, insbesondere bevorzugt von 80 µm bis 120 µm.

Aufgrund der Materialeigenschaften der reaktiven Schmelzmasse kann eine solche Dicke durch einmaliges Aufbringen erzeugt werden. Die Schicht ist somit einlagig hergestellt. Da auch dies unter anderem eine vorteilhafte Zeitersparnis darstellt, ist das einlagige Aufbringen im Rahmen der vorliegenden Erfindung bevorzugt. Ein mehrlagiges Aufbringen ist jedoch ebenfalls möglich. Ebenso kann auf die Schmelzmasse-Schicht eine weitere Schicht, wie beispielsweise eine Lackschicht, aufgebracht werden.

In Bezug auf die reaktive Schmelzmasse auf der Basis eines feuchtigkeitsvernetzenden Polyurethans für das erfindungsgemäße Verfahren bzw. den erfindungsgemäßen Gegenstand mit einer solchen Schicht hat sich überraschenderweise herausgestellt, dass sich PU-Schmelzklebstoffe eignen, die aus Ausgangsstoffen basieren, wie sie in WO-A 01/12691 beschrieben und nach Polymerisierung für die Verklebung von in-line gerundeten Buchblocks vorgesehen sind.

Beispielsweise kann es sich daher bei der reaktiven Schmelzmasse auf der Basis eines feuchtigkeitsvernetzenden Polyurethans für das erfindungsgemäße Verfahren bzw. den erfindungsgemäßen Gegenstand mit einer solchen Schicht um einen Schmelzklebstoff, wie er in der WO-A 01/12691 offenbart wird, handeln.

Demzufolge ist vorzugsweise die chemische Basis der durch Strahlung härtbaren Schmelzmasse auf der Basis eines feuchtigkeitsvernetzenden Polyurethans wie die, welche in der WO-A 98/40225 beschrieben ist. Demnach enthält die strahlungs-reaktive Schmelzmasse auf der Basis eines feuchtigkeitsvernetzenden Polyurethans vorzugsweise eine durch Elektronen oder UV-Srahlung polymerisierbare Komponente, einen Fotoinitiator sowie gegebenenfalls Zusatzstoffe.

Die reaktive Schmelzmasse auf der Basis eines feuchtigkeitsvernetzenden Polyurethans enthält vorzugsweise vor Aushärten mindestens eine durch die Bestrahlung polymerisierbare funktionelle Gruppe sowie NCO-Gruppen.

Im Rahmen der vorliegenden Erfindung sind hierbei olefinisch ungesättigte Doppelbindungen als durch Strahlung polymerisierbare funktionelle Gruppen bevorzugt, wie sie beispielsweise in den Derivaten der Acrylsäure oder des Styrols vor Aushärten vorliegen.

Besonders geeignet und im Rahmen der vorliegenden Erfindung bevorzugt sind die Derivate der Acrylsäure, beispielsweise die Acrylate und die Meth-acrylate mit 1 bis 16, vorzugsweise 1 bis 4 C-Atomen in der Alkohol- Komponente.

Die reaktive Schmelzmasse ist bei Raumtemperatur fest und kann gemäss der vorliegenden Erfindung erhalten werden durch Umsetzung
1.) eines oder mehrerer Polyisocyanate mit
2.) mindestens einem Polyol und
3.) mindestens einer Verbindung die durch UV- oder Elektronen-Bestrahlung polymerisierbare Gruppe enthält, bevorzugt eine Verbindung die zusätzlich isocyanatreaktive Gruppen enthält,
4.) gegebenenfalls einem Initiator und
5.) gegebenenfalls Zusatzstoffe wie Stabilisatoren, Weichmachern, Haftvermittlern, Füllstoffen, Mattierungsmitteln und dergleichen .

Zum Einsatz als Polyol ist beispielsweise ein Polymer ausgewählt aus der Gruppe bestehend aus Polyester, Polyether, Polycarbonate und Polyacetale geeignet, das ein Molekulargewicht (Mn) von mindestens etwa 200 aufweist, oder Gemische aus zwei oder mehr davon. Die Polyole weisen vorzugsweise terminale OH-Gruppen auf.

Polyole auf Basis von Polyestern können in einer dem Fachmann bekannten Weise durch Polykondensation von Säure- und Alkoholkomponenten gewonnen werden, insbesondere durch Polykondensation einer Polycarbonsäure oder eines Gemischs aus zwei oder mehr Polycarbonsäuren und einem Polyol oder einem Gemisch aus zwei oder mehr Polyolen.

Polyole auf Polyesterbasis können flüssig amorph oder auch kristallin sein.
Zur Herstellung der Polyole auf Polyesterbasis geeignete Polycarbonsäuren können auf einem aliphatischen, cycloaliphatischen, araliphatischen, aromatischen oder heterocyclischen Grundkörper aufgebaut sein und gegebenenfalls neben den mindestens zwei Carbonsäuregruppen noch einen oder mehrere im Rahmen einer Polykondensation nicht-reaktive Substituenten, beispielsweise Halogenatome oder olefinisch ungesättigte Doppelbindungen, aufweisen. Gegebenenfalls können anstatt der freien Carbonsäuren auch deren Säureanhydride (soweit existent), oder deren Ester mit C₁₋₅-Monoalkoholen, oder Gemische aus zwei oder mehr davon, zur Polykondensation eingesetzt werden. Geeignete Polycarbonsäuren bzw. Anhydride sind beispielsweise Bernsteinsäure, Adipinsäure, Korksäure, Azelainsäure, Sebacinsäure, Glutarsäure, Glutarsäureanhydrid, Phthalsäure, Isophthalsäure, Terephthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäuren oder Trimerfettsäuren oder Gemische aus zwei oder mehr davon. Gegebenenfalls können untergeordnete Mengen an monofunktionellen Fettsäuren im Reaktionsgemisch vorliegen.

Als Diole zur Herstellung der Polyester oder der Polycarbonate können eine Vielzahl von Polyolen eingesetzt werden. Beispielsweise sind dies aliphatische Polyole mit 2 bis 4 OH-Gruppen pro Molekül. Die OH-Gruppen können sowohl primär als auch sekundär gebunden sein. Zu den geeigneten aliphatischen Polyolen zählen beispielsweise Ethylenglykol, Propandiol-1,2, Propandiol-1,3, Butandiol-1,4, Butandiol-1,3, Butandiol-2,3, Butendiol-1,4, Butindiol- 1,4, Pentandiol-1,5, sowie die isomeren Pentandiole, Pentendiole oder Pentindiole oder Gemische aus zwei oder mehr davon, Hexandiol-1,6, sowie die isomeren Hexandiole, Hexendiole oder Hexindiole oder Gemische aus zwei oder mehr davon, Heptandiol-1,7 sowie die isomeren Heptan-, Hepten- oder Heptindiole, Octandiol-1,8 sowie die isomeren Octan-, Octen- oder Octindiole, und die höheren Homologen oder Isomeren der genannten Verbindung, wie sie sich aus einer schrittweisen Verlängerung der Kohlenwasserstoffkette um jeweils eine CH₂-Gruppe oder unter Einführung von Verzweigungen in die Kohlenstoffkette ergeben, oder Gemische aus zwei oder mehr davon. Ebenfalls geeignet sind höherfunktionelle Alkohole wie beispielsweise Glycerin, Trimethylolpropan, Pentaerythrit oder Zuckeralkohole wie Sorbit oder Glucose, sowie oligomere Ether der genannten Substanzen mit sich selbst oder im Gemisch aus zwei oder mehr der genannten Verbindungen untereinander, beispielsweise Polyglycerin mit einem Polymerisationsgrad von etwa 2 bis etwa 4. Bei den höherfunktionellen Alkoholen können eine oder mehr OH-Gruppen mit monofunktionellen Carbonsäuren mit 1 bis etwa 20 C-Atomen verestert sein, mit der Maßgabe, dass im Durchschnitt wenigstens zwei OH-Gruppen erhalten bleiben. Die genannten höherfunktionellen Alkohole können in reiner Form oder, soweit möglich, als die im Rahmen ihrer Synthese erhältlichen technischen Gemische eingesetzt werden.
Als Polyole geeignete Polyester sind beispielsweise die von der Fa. Degussa erhältlichen Dynacoll-Typen. Das Molekulargewicht der als Polyester einsetzbaren Polyole liegt zwischen 1000 und 10000 g/mol, besonders bevorzugt zwischen 2000 und 6000 g/mol. Bevorzugt werden im Rahmen der Erfindung kristalline und amorphe Polyester verwendet, da mit diesen sehr kurze offene Zeiten bzw. eine schnelle Blockfreiheit erreicht werden kann.

Ebenfalls als Polyole geeignet sind Polyetherpolyole. Polyetherpolyole werden üblicherweise durch Umsetzung einer Startverbindung mit mindestens zwei reaktiven Wasserstoffatomen mit Alkylen- oder Arylenoxiden, beispielsweise Ethylenoxid, Propylenoxid, Butylenoxid, Styroloxid, Tetrahydrofuran oder Epichlorhydrin oder Gemischen aus zwei oder mehr davon, erhalten. Geeignete Startverbindungen sind beispielsweise Wasser, Ethylenglykol, Propylenglykol-1,2 oder -1,3, Butylenglykol-1,4, oder -1,3, Hexandiol-1,6, Octandiol-1,8, Neopentylglykol, 1,4-Hydroxymethylcyclohexan, 2-Methyl-1,3-Propandiol, Glycerin, Trimethylolpropan, Hexantriol-1,2,6, Butantriol-1,2,4, Trimethylolethan, Pentaerythrit, Mannitol, Sorbitol, Methylglycoside, Zucker, Phenol, Isononylphenol, Resorcin, Hydrochinon, 1,2,2- oder 1,1,2-Tris-(Hydroxyphenyl)-Ethan, Ammoniak, Methylamin, Ethylendiamin, Tetra- oder Hexamethylenamin, Triethanolamin, Anilin, Phenylendiamin, 2,4- und 2,6-Diaminotoluol und Polyphenylpolymethylenpolyamine, wie sie sich durch Anilin-Formaldehydkondensation erhalten lassen. Besonders geeignet sind dabei Polypropylenglykole mit einem Molekulargewicht von etwa 250 bis etwa 4000.

Ebenfalls als Polyole geeignet sind Polyacetale. Unter Polyacetalen werden Verbindungen verstanden, wie sie durch Umsetzung von Glykolen, beispielsweise Diethylenglykol oder Hexandiol, mit Formaldehyd erhältlich sind. Im Rahmen der Erfindung einsetzbare Polyacetale können auch durch die Polymerisation cyclischer Acetale erhalten werden.

Weiterhin als Polyole geeignet sind Polycarbonate. Polycarbonate können beispielsweise durch die Reaktion der oben genannten Polyole, insbesondere von Diolen wie Propylenglykol, Butandiol-1,4 oder Hexandiol-1,6, Diethylenglykol, Triethylenglykol oder Tetraethylenglykol oder Gemischen aus zwei oder mehr davon, mit Diarylcarbonaten, beispielsweise Diphenylcarbonat oder Phosgen, erhalten werden.

Ebenfalls als Polyole geeignet sind OH-Gruppen tragende Polyacrylate. Solche Polyacrylate sind beispielsweise erhältlich durch Polymerisation von ethylenisch ungesättigten Monomeren, die OH-Gruppen tragen. Solche Monomere sind beispielsweise durch die Veresterung von ethylenisch ungesättigten Carbonsäuren und difunktionellen Alkoholen erhältlich, wobei der Alkohol in der Regel nur in einem leichten Überschuss vorliegt. Hierzu geeignete, ethylenisch ungesättigte Carbonsäuren sind beispielsweise Acrylsäure, Methacrylsäure, Crotonsäure oder Maleinsäure. Entsprechende OH-Gruppen tragende Ester sind beispielsweise 2-Hydroxyethylacrylat, 2-Hydroxyethylmethacrylat, 2-Hydroxypropylacrylat, 2- Hydroxypropylacrylat, 2-Hydroxypropylmethacrylat, 3-Hydroxypropylacrylat oder 3- Hydroxypropylmethacrylat oder Gemische aus zwei oder mehr davon.

Polyisocyanate, die zur Umsetzung mit den Polyolen geeignet sind, enthalten im Durchschnitt zwei bis höchstens etwa vier Isocyanatgruppen. Beispiele für geeignete Isocyanate sind 1,5-Naph-thalindiisocyanat, 4,4'-Diphenylmethandiisocyanat (MDI), hydriertes MDI (Dicyclohexylmethandiisocyanat, H12-MDI), Xylylendiisocyanat (XDI), Tetramethylxylylendiisocyanat (TMXDI), 4,4'- Diphenyldimethylmethandiisocyanat sowie Di- und Tetraalkyldiphenylmethandiisocyanat, 4,4'-Dibenzyldiisocyanat, 1,3-Phenylendiisocyanat, 1,4-Phenylendiisocyanat, 2,4- und 2,6-Toluylendiisocyanat (TDI) und deren Gemische, insbesondere ein Gemisch enthaltend etwa 20% 2,4- und 80 Gew.-% 2,6-Toluylendiisocyanat, sowie TDI-Urethdione, insbesondere dimerem 1-Methyl-2,4-phenylen-diisocyanat (TDI-U), und TDI-Harnstoffe; 1-Methyl-2,4-diisocyanatocyclohexan, 1,6- Diisocyanato-2,2,4-trimethylhexan, 1,6-Diisocyanato-2,4,4-trimethylhexan, 1-Iso-cyanato-3-isocyanatomethyl-3,5,5-trimethylcyclohexan (IPDI) und dessen Isomere und Derivate, insbesondere Di-, Tri- und Polymerisate, sowie IPDI-Isocyanurat (IPDI-T), chlorierte und bromierte Diisocyanate, phosphorhaltige Diisocyanate, 4,4'-Diisocyanatophenylperfluorethan, Tetramethoxybutan-1,4-diisocyanat, 1,4-Butandiisocyanat, 1,6-Hexandiisocyanat (HDI), Cyclohexan-1,4-diisocyanat, Ethylendiisocyanat, Phthalsäurebisisocyanatoethylester; Polyisocyanate, die reaktive Halogenatome enthalten, wie 1-Chlormethylphenyl-2,4-diisocyanat, 1-Bromethylphenyl-2,6-diisocyanat, 3,3-Bis-chlormethylether-4,4'-diphenyldi-isocyanat. Ebenso einsetzbar sind schwefelhaltige Polyisocyanate, wie sie beispielsweise durch Umsetzung von 2 mol Hexamethylendiisocyanat mit 1 mol Thiodiglykol oder Dihydroxydihexylsulfid erhältlich sind. Andere Diisocyanate sind Trimethylhexamethylendiisocyanate, 1,4-Diisocyanatobutan, 1,2-Diisocyanatododekan und Dimerfettsäurediisocyanate.
Besonders bevorzugt sind im Rahmen der vorliegenden Erfindung aliphatische Isocyanate wie IPDI, HDI, TMXDI und H12-MDI und deren Derivate.
Als Polyisocyanate können auch Prepolymere, d.h Umsetzungsprodukte von obengenannten Isocyanaten mit obengennanten Polyetherpolyolen verwendet werden. Diese Prepolymer werden durch Umsetzung der obengenannten Polyetherpolyole mit einem Überschuss der obengenannten Polyisocyanat auf die bekannte Weise hergestellt. Als Polyetherpolyolkompontente werden vorzugsweise Polyethylenoxide und Polypropylenoxide verwendet.

Die genannten Polyisocyanate können im Rahmen der vorliegenden Erfindung einzeln oder als Gemisch aus zwei oder mehr der genannten Polyisocyanate eingesetzt werden. Vorzugsweise wird im Rahmen der vorliegenden Erfindung ein einzelnes Polyisocyanat oder ein Gemisch aus zwei oder drei Polyisocyanaten eingesetzt.

Als durch Bestrahlung polymerisierbare Komponenten können alle Verbindungen verwendet werden, die vorzugsweise eine oder mehrere durch Elektronen- und/oder UV-Strahlung polymerisierbare funktionelle Gruppen enthalten. Bevorzugt werden dabei Verbindungen mit olefinisch ungesättigten funktionellen Gruppen verwendet.
Besonders bevorzugt sind die Derivate der Acrylsäure, der Methacrylsäure, der Crotonsäure und der Maleinsäure. Diese Derivate können bevorzugt isocyanatreaktive Gruppen wie Hydroxygruppen, Amingruppen und Mercaptogruppen enthalten. Beispiele für solche Verbindungen sind 2-Hydroxyethyl(meth)acrylat, 2-Hydroxypropyl(meth)acrylat und 3-Hydroxyproply(meth)acrylat. Diese werden durch Umsetzung z.B. der Acrylsäure mit Diolen erhalten.

Neben den durch Bestrahlung polymerisierbaren Verbindungen mit isocyanatreaktiven Gruppen können auch zumindest teilweise solche Verbindungen ohne isocyanatreaktive Gruppen eingesetzt werden. Beispiele hierfür sind Methyl(meth)acrylat, Styrol, Phenoxyethylacrylat und dergleichen.
Bevorzugt können aber auch durch Bestrahlung härtbare Verbindungen eingesetzt werden, die zwei und mehr UV-und/oder eletronenstrahl-härtbare Gruppen pro Molekül aufweisen. Beispiele hierfür sind Polyesteracrylate, Polyetheracrylate und Epoxyacrylate. Diese Rohstoffe sind beispielweise über die Fa. UCB unter der Bezeichnung Ebecryl oder der Fa. Rahn unter der Bezeichnung Genomer und Miramer kommerziell verfügbar.

Vorzugsweise können als ein Photoinitiator für die radikalische Reaktion Stoffe und Stoffgemische eingesetzt werden, die bei Bestrahlung mit Licht mit einer Wellenlänge von etwa 260 bis etwa 480 nm dazu in der Lage sind, eine radikalische Polymerisation olefinisch ungesättigter Doppelbindungen zu initiieren. Grundsätzlich sind alle handelsüblichen Photoinitiatoren geeignet, die mit der UV-reaktiven Schmelzmasse auf der Basis eines feuchtigkeitsvernetzenden Polyurethans kompatibel sind, d. h. wenigstens weitgehend homogene Gemische ergeben.

Beispielsweise sind dies alle Norrish-Type I fragmentierenden Substanzen. Beispiele hierfür sind Benzophenon, Campherchinon, Quantacure (Hersteller: International Bio-Synthetics), Kayacure MBP (Hersteller Nippon Kayaku), Esacure BO (Hersteller: Fratelli Lamberti), Trigonal 14 (Hersteller: Akzo), Photoinitiatoren der Irgacure TM -, Darocure TM - oder Speedcure TM -Reihe (Hersteller: Ciba-Geigy), Darocure TM 1173 und/oder Fi-4 (Hersteller: Eastman) Insbesondere geeignet sind darunter Irgacure TM 651, Irgacure TM 369, Irgacure TM 184, Irgacure TM 907, Irgacure TM 1850, Irgacure TM 1173 (Darocure TM 1173), Irgacure TM 1116, Speedcure TM EDB, Speedcure TM ITX, Irgacure TM 784 oder Irgacure TM 2959 oder Gemische aus zwei oder mehr davon.

Bevorzugt sind Photoinitiatoren aus folgender Gruppe: Benzoin und dessen Derivate sowie Phenylhydroxyalkanon-Typen und Thioxanthon-Typen.

Weiterhin kann es sinnvoll sein in der Schmelzmasse Zusatzstoffe zu verwenden, um bestimmte Eigenschaften zu variieren oder einzustellen. Diese Zusatzstoffe können thermoplastisch Polymere wie z.B. Ethylenvinylacetat (EVA), ataktische Polyolefine (APAO), und Polyacrylate sein. Weiter können auch klebrigmachende Harze, Wachse, Weichmacher, Füllstoffe und Mattierungsmittel, Additive, Beschleuniger, Haftvermittler, Pigmente, Katalysatoren, Stabilisatoren und/oder Lösungsmittel sein. Als Stabilisatoren können insbesondere die bekannten Lichtschutzmittel und Oxidations- bzw. Hydrolysestabilisatoren eingesetzt werden.

Die Herstellung der strahlenhärtbaren Schmelzmasse kamm dadurch erfolgen, dass mindestens ein Polyisocyanat mit mindestens einem Polyol in einem molaren Verhältnis der Isocyanatgruppen zu den isocyanatreaktiven Gruppen der Polyole von 1,1 zu 1 bis 5 zu 1 umgesetzt wird.
Das so hergestellte Prepolymere A hat einen NCO-Gehalt von 0,5-20%.
Danach wird die durch Bestrahlung härtbare Verbindung mit isocyanatreaktiven Gruppen mit dem isocyanatterminierten Prepolymer A umgesetzt. In diesem 2. Schritt können auch der oder die Initiatoren und gegebenenfalls die oben beschriebenen Verbingungen, die keine isocyanatreaktiven Gruppen enthalten, sowie gegebenenfalls Zusatzstoffe wie Stabilisatoren, Füllstoffe usw. zugegeben werden.

Die 2. Umsetzung wird derart ausgeführt, dass die Zusammensetzung der reaktiven Schmelzmasse noch 0,25-20%, bevorzugt 0,5 bis 10%, besonders bevorzugt, 1 bis 5% Isocyanat, bezogen auf die Gesamtzusammensetzung enthält.

In einer zweiten Ausführungsform zur Herstellung wird mindestens ein Polyol mit einem ersten Polyisocyanat in einem molaren Verhältnis der Isocyanatgruppen zu den isocyanatreaktiven Gruppen der Polyole von 5:1 bis 1:5 umgesetzt. In einer zweiten Stufe wird dann mit einem zweiten Polyisocyanat derart umgesetzt, dass das so hergestellte Prepolymere B einen NCO-Gehalt von 0,5-20% aufweist.
Danach wird die durch Bestrahlung härtbare Verbindung mit isocyanatreaktiven Gruppen mit dem isocyanatterminierten Prepolymer umgesetzt. In diesem 3. Schritt können auch der oder die Initiatoren und gegebenenfalls die oben beschriebenen durch Bestrahlung polymerisierbaren Verbindungen, die keine isocyanatreaktiven Gruppen enthalten, sowie gegebenenfalls Zusatzstoffe wie Stabilisatoren, Füllstoffe usw. zugegben werden.
Die Umsetzung wird derart ausgeführt, dass die Zusammensetzung der reaktiven Schmelzmasse noch 0,25-20%, bevorzugt 0,5 bis 10%, besonders bevorzugt, 1 bis 5% Isocyanat, bezogen auf die Gesamtzusammensetzung enthält.

In einer dritten Ausführungsform zur Herstellung wird mindestens ein Polyol, die durch Bestrahlung härtbare Verbindung mit isocyanatreaktiven Gruppen, der oder die Initiatoren und gegebenenfalls die oben beschriebenen durch Bestrahlung polymerisierbaren Verbindungen, die keine isocyanatreaktiven Gruppen enthalten, sowie gegebenenfalls Zusatzstoffe wie Stabilisatoren, Füllstoffe und dergleichen gemischt und mit mindestens einem Polyisocyanat umgesetzt.
Die Umsetzung wird dabei so ausgeführt, dass die Zusammensetzung der reaktiven Schmelzmasse noch 0,25-20%, bevorzugt 0,5 bis 10%, besonders bevorzugt, 1 bis 5% Isocyanat, bezogen auf die Gesamtzusammensetzung enthält.

In einer vierten Ausführungsform zur Herstellung wird mindestens ein Polyol, die durch Bestrahlung härtbare Verbindung mit isocyanatreaktiven Gruppen, der oder die Initiatoren und gegebenenfalls die oben beschriebenen durch Bestrahlung polymerisierbaren Verbindungen, die keine isocyanatreaktiven Gruppen enthalten, sowie gegebenenfalls Zusatzstoffe wie Stabilisatoren, Füllstoffe und dergleichen gemischt und mit einem ersten Polyisocyanat in einem molaren Verhältnis der Isocyanatgruppen zu den isocyanatreaktiven Gruppen der Polole von 5:1 bis 1:5 umgesetzt.
In einem zweiten Schritt wird dann mit einem zweiten Polyisocyanat derart umgesetzt, dass die Zusammensetzung der reaktiven Schmelzmasse noch 0,25-20%, bevorzugt 0,5 bis 10%, besonders bevorzugt, 1 bis 5% Isocyanat, bezogen auf die Gesamtzusammensetzung enthält.

Die Gesamtmenge an durch Bestrahlung polymerisierbaren Komponenten bezogen auf die Gesamtzusammensetzung der reaktiven Schmelzmasse soll 2-75%, bevorzugt 5-50% betragen. Die Gesamtmenge an durch Bestrahlung polymerisierbaren Komponenten setzt sich dabei aus den isocyantreaktive Gruppen enthaltenden Verbindungen sowie den keine isocyanatreaktiven Gruppen enthaltenden Verbindungen zusammen.

Um eine möglichst baldige weitere Behandlung des Gegenstandes mit mindestens teilweiser Versiegelung der Oberfläche zu erreichen, findet die Bestrahlung üblicherweise vor vollständigem Aushärten der Schmelzmasse-Schicht statt. Dies verleiht der Schicht eine teilweise Festigkeit, die die besagte Behandlung erlaubt. Die vollständige Aushärtung erfolgt dann durch die Feuchtigkeitsvernetzung des Polyurethans.

Vorzugsweise erfolgt die Belichtung innerhalb von 24 Stunden nach Aufbringen der Schmelzmasse-Schicht. Bevorzugt wird die Belichtung in-line, d.h. direkt nach dem Auftragen der Schmelzmasse auf den Gegenstand durchgeführt.
Die Bestrahlung kann mit Hilfe gängiger Vorrichtungen wie erfolgen. Eine UV-Bestrahlung erfolgt beispielsweise mit einer UV-Lampe.

Mit dem erfindungsgemäßen Verfahren können die unterschiedlichsten Gegenstandsoberflächen oder zumindest Teile davon versiegelt werden, wobei diese Gegenstände ebenfalls ein Aspekt der vorliegenden Erfindung sind.

Neben Elementoberflächen für Laminat-, Dielen- oder Parkettböden sowie Paneele werden damit auch die Oberflächen von Möbeln oder Möbelteilen sowie Furniere zumindest teilweise versiegelt.

Es handelt sich bei dem Teil der Oberfläche eines Gegenstandes, um die gesamte Oberfläche einer Außenfläche des Gegenstandes, wobei vorzugsweise die Summe der Anteile der Außenfläche und der der Außenfläche gegenüberliegenden Fläche im Wesentlichen die Gesamtaußenfläche darstellen, weiterhin bevorzugt beträgt die Summe der Anteile mindestens 75%, mehr bevorzugt 90%, insbesondere bevorzugt 95%.

So bildet vorzugsweise bei einem im Wesentlichen in zwei Dimensionen erstreckenden Gegenstand, wie einem brettförmigen Gegenstand oder einem Furnier, mit zwei gegebenenfalls parallel gegenüberliegenden Fläche und einer umlaufenden Kante die eine Fläche den Teil der Oberfläche gemäß der vorliegenden Erfindung.

Bei den Gegenständen handelt es sich um Elemente für Laminat-, Dielen- oder Parkettböden sowie Paneele oder Furniere, an die besonders hohe Anforderungen in Bezug auf eine Versiegelung gestellt werden. Ebenso kann es sich bei den Gegenständen um Bleche handeln.

Die zu versiegelnde Gegenstandsoberfläche kann aus Holz, wie beispielsweise einem Furnier oder einer Faserplatte, Papier, Metall, Kunststoff sowie Mineralstoffe zumindest teilweise bestehen. Vorzugsweise besteht die Oberfläche zumindest teilweise aus Holzoder Kunststoffen.

Ein weiterer Gegenstand der vorliegenden Erfindung ist die Verwendung einer strahlenhärtbaren Schmelzmasse auf der Basis eines feuchtigkeitsvernetzenden Polyurethans zur Versiegelung mindestens eines Teils der Oberfläche eines Gegenstandes, wobei es sich bei dem Teil der Oberfläche um die gesamte Oberfläche einer Außenfläche handelt, wobei dieser Teil zumindest teilweise aus Holz, Metall, Kunststoff oder Mineralstoff besteht und wobei der Gegenstand ein Laminat-, Parkett- oder Dielenboden Element, eine Paneele oder ein Furnier bzw. ein Möbel oder Möbelstück oder ein Blech ist.

## Patentansprüche

1. Verfahren zur Versiegelung mindestens eines Teils der Oberfläche eines Gegenstandes, wobei dieser Teil zumindest teilweise aus Holz, Metall, Kunststoff oder Mineralstoff besteht und wobei der Gegenstand ein Laminat-, Parkett- oder Dielenboden Element, eine Paneele oder ein Furnier bzw. ein Möbel oder Möbelstück oder ein Blech ist, die Schritte enthaltend
(a) Versiegeln des mindestens einen Teils durch Aufbringen einer Schicht aus einer strahlenhärtbaren Schmelzmasse auf der Basis eines feuchtigkeitsvernetzenden Polyurethans auf zumindest einen Teil der Gegenstandsoberfläche; und
(b) Bestrahlung der Schmelzmasse-Schicht, wobei es sich bei dem Teil der Oberfläche um die gesamte Oberfläche einer Außenfläche handelt.

2. Verfahren nach Anspruch 1, **dadurch gekennzeichnet, dass** das Aufbringen der Schicht mit Hilfe einer Walze, eines Rakels oder einer Schlitzdüse oder durch Aufsprühen erfolgt.

3. Verfahren nach Anspruch 1 oder 2, **dadurch gekennzeichnet, dass** eine Glättung der Oberfläche der Schmelzmasse-Schicht erfolgt.

4. Verfahren nach einem der Ansprüche 1 bis 3, **dadurch gekennzeichnet, dass** die Schmelzmasse-Schicht in einer Dicke im Bereich von 5 µm bis 200 µm aufgebracht wird.

5. Verfahren nach einem der Ansprüche 1 bis 4, **dadurch gekennzeichnet, dass** die Schmelzmasse-Schicht einlagig aufgebracht wird.

6. Verfahren nach einem der Ansprüche 1 bis 4, **dadurch gekennzeichnet, dass** die Schmelzmasse vor Aushärten sowohl mindestens eine durch die Bestrahlung polymerisierbare funktionelle Gruppe als auch NCO-Gruppen enthält.

7. Verfahren nach einem der Ansprüche 1 bis 6, **dadurch gekennzeichnet, dass** die Schmelzmasse vor Aushärten Acrylsäure-, Methacrylsäure- oder Styrol-Derivate enthält.

8. Verfahren nach einem der Ansprüche 1 bis 7, **dadurch gekennzeichnet, dass** die Bestrahlung vor vollständigem Aushärten der Schmelzmasse-Schicht durch die Feuchtigkeitsvernetzung des Polyurethans erfolgt.

9. Verfahren nach einem der Ansprüche 1 bis 8, **dadurch gekennzeichnet, dass** die Bestrahlung innerhalb von 24 Stunden nach Aufbringen der Schmelzmasse-Schicht erfolgt.

10. Gegenstand mit einer Versiegelungsschicht auf zumindest einem Teil seiner Oberfläche enthaltend eine Schicht aus einer strahlenhärtbaren Schmelzmasse auf der Basis eines feuchtigkeitsvernetzenden Polyurethans, wobei es sich bei dem Teil der Oberfläche um die gesamte Oberffläche einer Außenfläche handelt, wobei der Teil der Gegenstandsoberfläche zumindest teilweise aus Holz, Metall, Kunststoff oder Mineralstoff besteht und wobei der Gegenstand ein Laminat-, Parkett- oder Dielenboden Element, eine Paneele oder ein Furnier bzw. ein Möbel oder Möbelstück oder ein Blech ist.

11. Gegenstand nach Anspruch 10, **dadurch gekennzeichnet, dass** die Schmelzmasse-Schicht eine Dicke im Bereich von 5 µm bis 200 µm aufweist.

12. Gegenstand nach Anspruch 10 oder 11, **dadurch gekennzeichnet, dass** die Schmelzmasse-Schicht einlagig aufgebracht ist.

13. Gegenstand nach einem der Ansprüche 10 bis 12, **dadurch gekennzeichnet, dass** die Schmelzmasse vor Aushärten sowohl mindestens eine durch die Bestrahlung polymerisierbare funktionelle Gruppe als auch NCO-Gruppen enthält.

14. Gegenstand nach einem der Ansprüche 10 bis 13, **dadurch gekennzeichnet, dass** die Schmelzmasse vor Aushärten Acrylsäure-, Methacrylsäure oder Styrol-Derivate enthält.

15. Gegenstand nach einem der Ansprüche 10 bis 14, **dadurch gekennzeichnet, dass** die Strahlenhärtung der Schmelzmasse-Schicht vor dem vollständigen Aushärten der reaktiven Schmelzmasse durch die Feuchtigkeitsvernetzung des Polyurethans erfolgt ist.

16. Verwendung einer strahlenhärtbaren Schmelzmasse auf der Basis eines feuchtigkeitsvernetzenden Polyurethans zur Versiegelung mindestens eines Teils der Oberfläche eines Gegenstandes, wobei es sich bei dem Teil der Oberfläche um die gesamte Oberfläche einer Außenfläche handelt, wobei dieser Teil zumindest teilweise aus Holz, Metall, Kunststoff oder Mineralstoff besteht und wobei der Gegenstand ein Laminat-, Parkett- oder Dielenboden Element, eine Paneele oder ein Furnier bzw. ein Möbel oder Möbelstück oder ein Blech ist.

## Claims

1. Method of sealing at least part of the surface of an article, where said part is composed at least partly of wood, metal, plastic or mineral substance and where the article is a laminated or wood-block flooring element, a panelling element or a veneer or a furniture element or piece of furniture, or a metal sheet, comprising the steps of
(a) sealing the at least one part by applying a layer of a radiation-curable melt based on a moisture-crosslinking polyurethane to at least part of the surface of the article, and
(b) irradiating the melt layer, where the part of the surface is the entire surface of an outer face.

2. Method according to Claim 1, **characterized in that** the layer is applied using a roll, a doctor blade or a slot die or by spraying.

3. Method according to Claim 1 or 2, **characterized in that** the surface of the melt layer is smoothed.

4. Method according to one of Claims 1 to 3, **characterized in that** the melt layer is applied at a thickness in the range from 5 µm to 200 µm.

5. Method according to one of Claims 1 to 4, **characterized in that** the melt layer is applied in a single ply.

6. Method according to one of Claims 1 to 4, **characterized in that** the melt prior to curing contains not only at least one irradiation-polymerizable functional group but also NCO groups.

7. Method according to one of Claims 1 to 6, **characterized in that** the melt prior to curing comprises acrylic acid derivatives, methacrylic acid derivatives or styrene derivatives.

8. Method according to one of Claims 1 to 7, **characterized in that** the irradiation takes place prior to full curing of the melt layer through the moisture crosslinking of the polyurethane.

9. Method according to one of Claims 1 to 8, **characterized in that** the irradiation takes place within 24 hours following application of the melt layer.

10. Article having a sealing layer on at least part of its surface, comprising a layer of a radiation-curable melt based on a moisture-crosslinking polyurethane, where the part of the surface is the entire surface of an outer face, where the part of the surface of the article is composed at least partly of wood, metal, plastic or mineral substance, and where the article is laminated or wood-block flooring element, a panelling element or a veneer or a furniture element or piece of furniture, or a metal sheet.

11. Article according to Claim 10, **characterized in that** the melt layer has a thickness in the range from 5 µm to 200 µm.

12. Article according to Claim 10 or 11, **characterized in that** the melt layer has been applied in a single ply.

13. Article according to one of Claims 10 to 12, **characterized in that** the melt prior to curing contains not only at least one irradiation-polymerizable functional group but also NCO groups.

14. Article according to one of Claims 10 to 13, **characterized in that** the melt prior to curing comprises acrylic acid derivatives, methacrylic acid derivatives or styrene derivatives.

15. Article according to one of Claims 10 to 14, **characterized in that** the radiation curing of the melt layer has taken place prior to full curing of the reactive melt through the moisture crosslinking of the polyurethane.

16. Use of a radiation-curable melt based on a moisture-crosslinking polyurethane for sealing at least part of the surface of an article, where the part of the surface is the entire surface of an outer face, where said part is composed at least partly of wood, metal, plastic or mineral substance and where the article is laminated or wood-block flooring element, a panelling element or a veneer or a furniture element or a piece of furniture, or a metal sheet.

## Revendications

1. Procédé de scellement d'au moins une partie de la surface d'un article dans lequel cette partie est au moins partiellement formée de bois, métal, matière plastique ou matière inorganique et dans lequel l'article consiste en éléments de stratifiés, éléments de parquet ou éléments de plancher, un panneau ou un placage respectivement un meuble ou un article de mobilier ou une tôle, comprenant les étapes suivantes:
a) scellement d'au moins ladite partie par application d'une couche d'une masse fondue, durcissable par irradiation, à base d'un polyuréthanne réticulant à l'humidité, sur au moins une partie de la surface de l'article; et
(b) irradiation de la couche d'une masse fondue,
dans lequel par partie de la surface, on entend la totalité d'une surface extérieure.

2. Procédé selon la revendication 1, **caractérisé en ce que** l'application de la couche est réalisée au moyen d'un rouleau, d'une racle ou d'une filière à fente ou par pulvérisation.

3. Procédé selon la revendication 1 ou 2, **caractérisé en ce qu'**est réalisé un lissage de la surface de la couche de masse fondue.

4. Procédé selon l'une des revendications 1 à 3, **caractérisé en ce que** la couche de masse fondue est appliquée sur une épaisseur comprise entre 5 microns et 200 microns.

5. Procédé selon l'une des revendications 1 à 4, **caractérisé en ce que** la couche de masse fondue est appliquée sous forme de couche unitaire.

6. Procédé selon l'une des revendications 1 à 4, **caractérisé en ce que** la masse fondue avant durcissement contient à la fois au moins un groupe fonctionnel polymérisable par irradiation ainsi qu'également des groupes NCO.

7. Procédé selon l'une des revendications 1 à 6, **caractérisé en ce que** la masse fondue contient avant durcissement de l'acide acrylique, de l'acide méthacrylique ou des dérivés du styrène.

8. Procédé selon l'une des revendications 1 à 7, **caractérisé en ce que** l'irradiation avant durcissement complet de la couche de masse fondue est réalisée par réticulation, sous effet de l'humidité, du polyuréthane.

9. Procédé selon l'une des revendications 1 à 8, **caractérisé en ce que** l'irradiation a lieu dans les 24 heures suivant l'application de la couche de la masse fondue.

10. Article présentant une couche de scellement sur au moins une partie de sa surface comprenant une couche formée d'une masse fondue, durcissable par irradiation, à base d'un polyuréthane réticulant à l'humidité,
- dans lequel par partie de la surface, on entend la totalité d'une surface extérieure,
- dans lequel une partie de la surface de l'article consiste au moins partiellement en bois, métal, matière plastique ou produit inorganique, et,
- dans lequel l'article consiste en éléments stratifiés, éléments de parquet ou éléments de plancher, un panneau ou un placage, respectivement un meuble ou un article de mobilier ou une tôle

11. Article selon la revendication 10, **caractérisé en ce que** la couche de masse fondue présente une épaisseur comprise entre 5 microns et 200 microns.

12. Article selon la revendication 10 ou 11, **caractérisé en ce que** la couche de masse fondue est appliquée sous forme de couche unitaire.

13. Article selon l'une des revendications 10 à 12, **caractérisé en ce que** la masse fondue avant durcissement contient à la fois au moins un groupe fonctionnel polymérisable par irradiation ainsi qu'également des groupes NCO.

14. Article selon l'une des revendications 10 à 13, **caractérisé en ce que** la masse fondue avant durcissement contient de l'acide acrylique, de l'acide méthacrylique ou des dérivés du styrène.

15. Article selon l'une des revendications 10 à 14, **caractérisé en ce que** le durcissement par irradiation de la couche de masse fondue avant le durcissement total de la masse fondue réactive est réalisée par réticulation, sous effet de l'humidité, du polyuréthane.

16. Utilisation d'une masse fondue durcissable par irradiation sur la base du polyuréthane réticulant sous effet de l'humidité pour le scellement d'au moins une partie de la surface extérieure d'un article,
- dans lequel par partie de la surface, on entend la totalité d'une surface extérieure,
- dans lequel cette partie consiste au moins partiellement en bois, métal, matière plastique ou produit inorganique, et,
- dans lequel l'article consiste en éléments stratifiés, éléments de parquet ou éléments de plancher, un panneau ou un placage respectivement un meuble ou un article de mobilier ou une tôle
